# EUROPEAN PATENT APPLICATION

(11) **EP 4 489 252 A1**
(43) Date of publication of application: **08.01.2025**
(21) Application number: 23213003.9
(22) Date of filing: 29.11.2023
(51) Int. Cl.: H02J 7/00, H01M 10/44

(54) **FAST BATTERY CHARGING**

(30) Priority: 01.07.2023 US 202318217556
(71) Applicant: INTEL Corporation, Santa Clara, CA 95054 (US)
(72) Inventor: Singh, Jagadish, 560037 Bangalore (IN); Matsumura, Naoki, San Jose, CA 95118 (US); S, Ravikumar, 560092 Bangalore KA (IN); Nanjundappa, Harshitha, San Jose, CA 95134 (US); Woods, David, El Dorado Hills, CA 95762 (US)
(74) Representative: Samson & Partner Patentanwälte mbB

(57) **Abstract**

Some examples provide battery charging techniques that allow for reasonably fast charging while reducing charging temperature. In some examples, a target temperature limit is actively maintained through a control loop. In some examples, CC charge phases are interleaved with CV stages.

## Description

### TECHNICAL FIELD

Embodiments of the invention relate to the field of battery powered delivery; and more specifically, to techniques for charging re-chargeable batteries.

### BRIEF DESCRIPTION OF THE DRAWINGS

The invention may best be understood by referring to the following description and accompanying drawings that are used to illustrate embodiments of the invention. In the drawings:
Figs. 1A and 1B illustrate conventional CC-CV-CC-CV approaches for fast battery charging.
Fig. 2 is a block diagram showing a computing platform with a battery charging system in accordance with some embodiments.
Fig. 3 is a flow diagram showing a routine for charging a battery in accordance with some embodiments.
Fig. 4 is a flow diagram showing an exemplary implementation of the routine of Fig. 3 for charging a battery in accordance with some embodiments.
Figs. 5A and 5B are graphs showing representative charge profiles in accordance with some embodiments.
Fig. 6A is a graph showing charge performance characteristics for a conventional fast charging scheme.
Fig. 6B is a graph showing charge performance characteristics for an exemplary fast charging scheme in accordance with some embodiments.
Fig. 6C is a graph comparing life cycle performance for a conventional fast charging approach and an exemplary fast charging approach in accordance with some embodiments.
Fig. 7 is a flow diagram showing a routine for implementing a temperature controlled fast charging approach in accordance with some embodiments.
Fig. 8 illustrates an example computing system in accordance with some embodiments.
Fig. 9 illustrates a block diagram of an example processor and/or SoC for the system of Fig. 8 in accordance with some embodiments.

### DETAILED DESCRIPTION

Batteries such as Lithium-Ion (Li-ion) batteries are widely used in electronic systems such as smartphones, laptops, and electric vehicles due to their high energy density, resulting in long battery-life/driving-range. There are several different ways that batteries are charged. For example, a technique known as constant-current constant-voltage (CC-CV) charging is widely used. It involves charging the battery at a constant current until it reaches a predetermined voltage level, after which the charging voltage is held constant while the current decreases gradually until the battery is fully charged. This technique works well except that it is relatively slow, taking in excess of 2.5 hours for fully charging battery packs in many mobile systems.

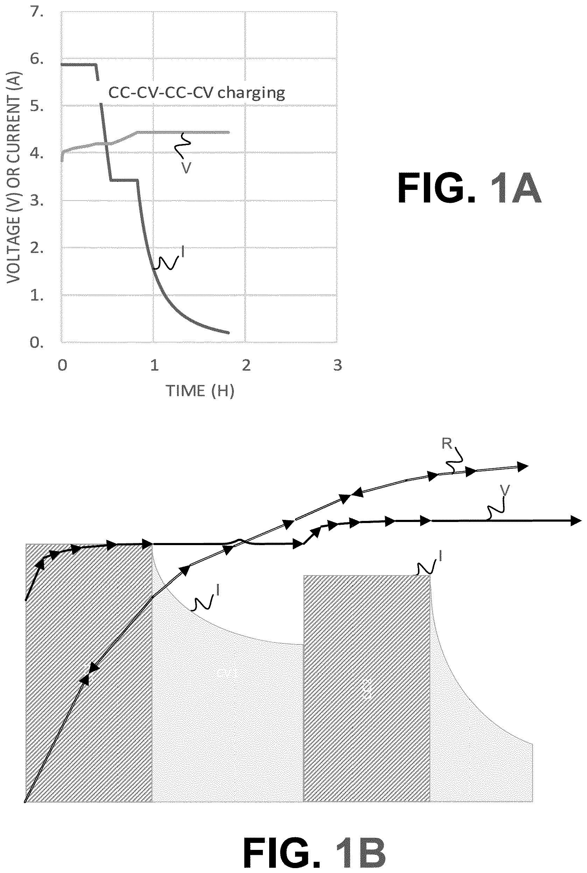

As a response to user demand for faster charging, so-called fast charging strategies have been developed such as the CC-CV-CC-CV approach. It involves charging the battery at a constant current until it reaches a predetermined voltage level, after which the charging voltage is held constant while the current decreases gradually. Then the battery is charged at a lower constant current until it reaches a higher predetermined voltage level, after which the charging voltage is held constant while the current decreases gradually. This is repeated in as many cycles as required to fully charge the battery. Examples of CC-CV-CC-CV approaches are shown in Figs. 1A and 1B. As can be seen, charging starts with an elevated constant current when the battery state of charge is low, followed by an interim constant voltage stage. When current is reduced to a certain level during the interim constant voltage charging stage, additional CC-CV stages follow but with lower current in the CC stage(s). From a speed perspective, this approach works well with charging times improved over previous single stage implementations. For example, under similar conditions, a two-stage (CC-CV-CC-CV) method took only 1.82 hours whereas the single stage (CC-CV) process took 2.59 hours. Unfortunately, however, with two-stage charging, the batteries typically have shorter cycle-life (number of charge-discharge cycles before a battery's capacity degrades significantly). The degradation of battery capacity over time can affect the performance and desirability of a device. For example, laptop systems typically require at least 80% capacity retention with more than 500 charge-discharge cycles. Unfortunately, it may be difficult to reach such goals with traditional 2-stage fast charging. It was found, for example, that traditional two-stage fast charging reached 80% in only 220 cycles for some representative laptop systems.

Accordingly, new charge techniques addressing these challenges are presented. One reason that traditional two-stage fast-charging has life cycle issues is that it can impose relatively high battery charge temperatures for excessive amounts of time. Therefore, techniques for implementing fast charging but without incurring significant battery charge temperatures over time are disclosed. In some embodiments, excessive sustained currents are mitigated by interleaving CV stages within one or more of the CC stages, reducing the temperature rise that otherwise would have been seen with tolerable increases in overall charge time.

In some other approaches, battery temperature may be regulated during the charge cycle, e.g., to a target temperature limit, set below a battery's authorized high temperature region, while providing a fast charging current, e.g., highest that can be implemented while staying within the target temperature limit.

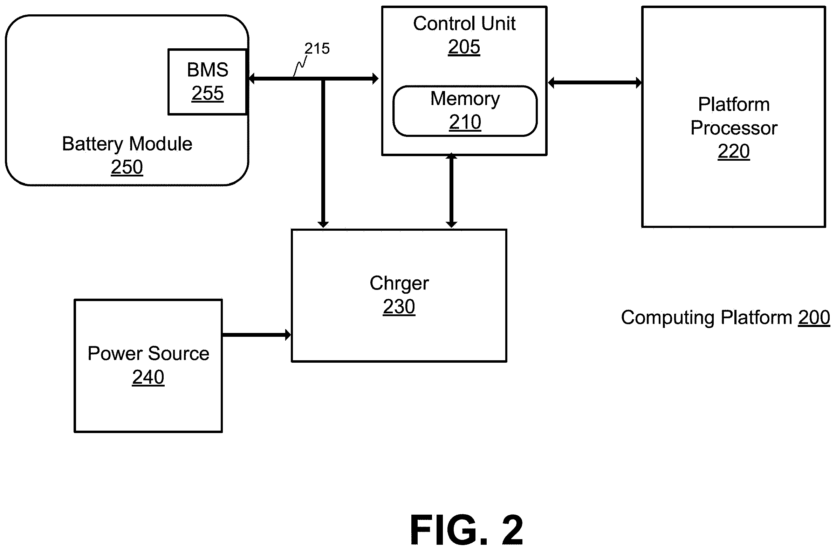

Fig. 2 is a block diagram showing a computing platform 200 including a battery charging system in accordance with some embodiments. Shown is a control unit 205, a charger 230 and a battery 250. Also included in this figure are a platform processor 220 and a power source (e.g., alternating current adapter, DC source, e.g., from another battery or device, etc.) 240 for providing power to the battery 250 and to the platform processor 220, along with other platform components not shown for convenience.

The battery 250 may include one or more battery cells made from any suitable materials including Li-Ion, Li-Poly, Iron-Phosphates, etc. or from any other suitable materials. The battery may also include a battery management system (BMS) 255 (also referred to as a protection circuit). A BMS will typically protect the battery against over charge, over discharge and external short circuits. Many battery management systems can also include a fuel gauge, allowing battery life information to be read by the control unit 205. Other data such as measured temperature, charge current, charge voltage, charge level, etc., along with maximum ratings for these same parameters and other information may also be read by the control unit 205 from the battery, although in other embodiments, it may come from another source or sources. In some embodiments, the values and limits for low, standard, and high temperature safety regions can be read from a battery pack manager (e.g., BMS) and could also be reflected dynamically in the max charging current and voltage values that are periodically read from the battery and used by a battery management subsystem to configure charging.

The control unit205 is coupled to the battery 250 through an interface 215 such as a system management bus (SMBus). It is also coupled to the charger 230, which in turn, is coupled to the battery 250. In typical operations, the control unit monitors battery parameters and controls the charger to charge the battery under certain specified conditions (e.g., constant current, CC, at a certain current level, constant voltage, CV, at a certain voltage level, etc.)

The control unit205 has memory 210, along with logic and other components, to execute code (e.g., firmware) for performing various charge-related functions. For example, it can measure, calculate and/or receive information about the battery 250 including the aforementioned parameters, as well as cut-off voltage (COV), battery charge impedance (Rb), percent charged, stored power, and charger-related parameters such as charge voltage (Vb), charge current (Ib), power provided to the battery, etc.. The control unit205 may include a timer (not shown) to measure, for example, charge times or temperature check intervals. The control unit can communicate with and/or control output of the charger 230, which receives power from power source 240. The charger 205 can operate in different states, including a CC state with a cutoff voltage threshold and/or a constant voltage state with a cutoff current threshold.

In some embodiments, the charger 205 operates in a constant current (CC) state, constant voltage (CV) state, trickle charge state and/or an off state. The control unit205 can monitor thresholds (e.g., CC threshold or CV threshold) and cause the charger 230 to switch between these states.

It should be appreciated that the charge system components can be implemented in any suitable manner. For example, the control unit and/or charger could be part of an integrated circuit such as a system on a chip (SOC), a power management integrated circuit (PMIC), or a dedicated charger/control unit device. The charge management components can also be split, such as between a charging system and battery system. For example, in some embodiments, techniques described herein may be performed in the control unit, the charger, the battery (e.g., in the BMS) or in any combination of the same. Note also that the computing platform may be any device that has a battery amenable to charging techniques as described herein. For example, it could be a mobile computer such as a laptop, a tablet, a smart phone, an electric vehicle, or other vehicle having a re-chargeable battery, an appliance, and the like. In addition, the power source could come from an AC adapter made for the device or from a multi-function interconnect device capable of charging such as a universal serial bus (USB) device. Along these lines, some mobile computers include lithium-ion smart battery packs having a BMS within the pack, but embodiments disclosed herein can be applied equally to other devices, e.g., where telemetry and other battery management functions are primarily controlled by the device. In this example, the battery is the source of data for charge voltage, maximum charge current, state of charge, as well as cell temperature, voltage, and current measurements, but this and other data could come from other sources.

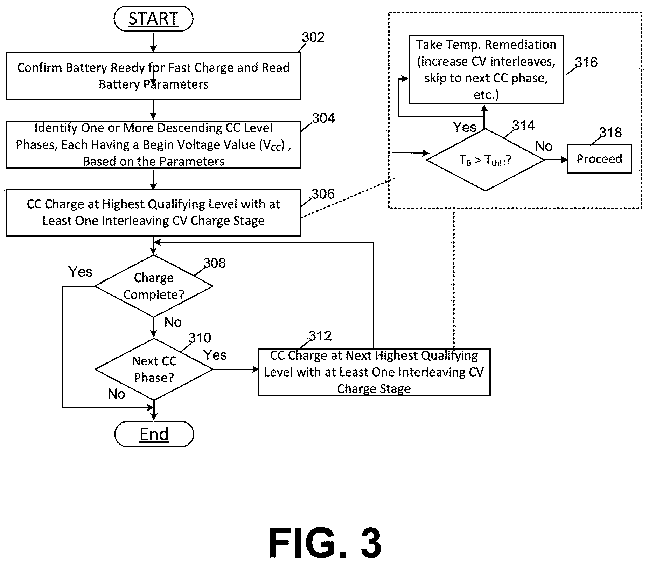

Fig. 3 is a flow diagram showing a routine for charging a battery in accordance with some embodiments. Initially, at 302, the routine confirms the battery is ready for fast charging. In doing this, it reads various battery parameters such as temperature, charge state, cut-off voltage and/or a charge voltage level, for example, to ensure the battery is neither under-charged or over-charged. If conditions are satisfactory for charging, then the routine proceeds to 304 and defines (or identifies) one or more descending CC level phases, each Having a Begin Voltage Value (Vcc) to be executed based on the read parameters, as well as on design considerations such as charge time, charge limitations, etc. In some embodiments, apart from the first CC phase, each subsequent phase may have a different (likely increasing) begin voltage level. This is one way to identify when a CC phase is to start or end.

(Note that a "stage", as used herein, refers to a continuous period in time where only a single CC or CV charge operation is being applied. Stages can have different time periods, but each stage consists of a single CV operation or a single CC operation. As used herein, "CC phase" or "CC charge phase" refers to a range in time having one or more CC stages that are all at substantially the same current level, or at least they are controlled to be at substantially the same current level. The range may have one or several CC stages, but if it has more than one CC stage, the CC stages are separated by CV stages, which may or may not be at different voltage levels.)

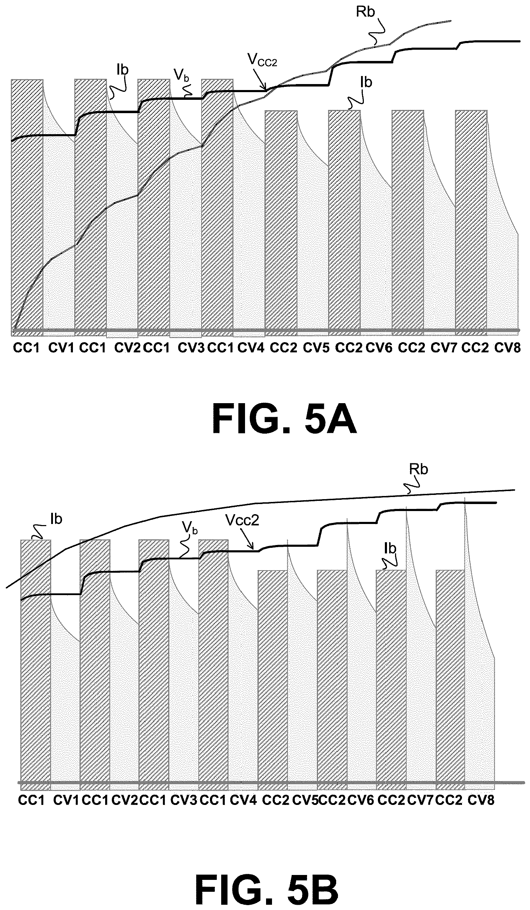

With reference to Figs. 5A and 5B, example charge curves exemplifying a charge profile that could be employed with this routine are shown. With these examples, two CC phases (CC1, CC2) are depicted. In each graph, a CC phase begin voltage (Vcc2) is indicated for the second CC phase. Next, at 306, the routine identifies a highest qualifying CC phase and initiates CC charging at that level. Whether or not a CC phase qualifies at a given time will depend on charge performance settings and dynamically changing conditions and parameters. In many cases, the first CC phase will likely qualify and be selected, although this is not absolute. In addition, once charging begins, subsequent CC phases may be skipped or even dynamically extended or contracted. Regardless, within a selected and executed CC phase, the routine interleaves at least one CV charge stage within the CC phase to essentially break it up, preventing excessive temperature rising.

When the CC phase has completed, the routine goes to 308 and determines if the battery charging has completed. If so, the routine ends with the battery being charged. Otherwise, at 308, it goes to 310 to determine if there is another CC phase to execute. If not, implying that something likely went wrong, the routine ends. On the other hand, if there is another CC phase to execute, then the routine goes to 312 and executes a next highest qualifying CC level with interleaved CV stages, as previously discussed.

In some embodiments, as depicted in the flow diagram, executing qualifying CC levels with interleaved CV stages (308, 312) may be done in accordance with routine actions 314-318. At 314, the routine checks to see if the temperature is adequately reduced or reducing. If so, it goes to 318 and proceeds normally. Otherwise, it goes to 316 and takes measures to slow down temperature rise and ideally, to reduce the temperature itself. To do this, the routine takes remediation measures. For example, it could increase CV frequency or width within a CC phase, or it could jump to the next CC phase or skip one or more CC phases in order to decrease the CC current level more quickly.

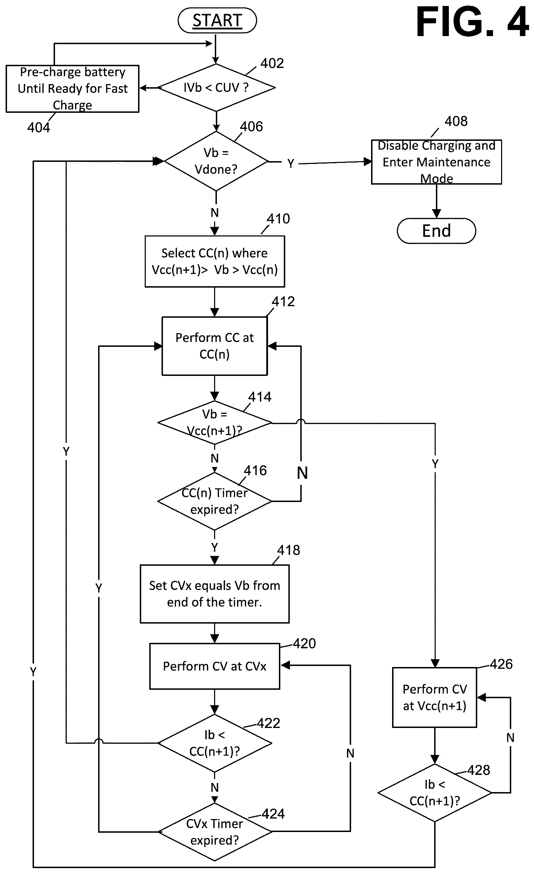

Fig. 4 is a flow diagram showing an exemplary implementation of the routine of Fig. 3 for charging a battery in accordance with some embodiments. At 402, the routine determines if the battery charge voltage (e.g., initial voltage) is below the cell under voltage (CUV), which would indicate the need for pre-charge before proceeding with fast charging. If this is the case, the routine executes pre-charge at 404 and returns to 402.

From here, the routine goes to 406 to determine if the charge process has completed by comparing Vb with the final target (Vdone). If charging has completed, the routine goes to 408 where it transitions into a charge maintenance mode and ends. If charging is not finished, then the routine goes to 410 where it selects a CC charge phase, CC(n), that fits the current charge voltage level (Vb). In particular, it looks for a CC phase, CC(n), such that the begin voltage (Vcc) for the next CC phase, CC(n+1), is larger than Vb and also the begin voltage for the candidate phase, CC(n) is less than Vb. From here, the routine goes to 412 and performs the CC(n) phase, performing constant current charging at the CC(n) current level.

At 414, it checks to see if Vb=Vcc(n+1), i.e., it checks to see if Vb is at the begin voltage of the next CC phase. If not, it goes to 416 and checks if the CC(n) timer has expired. This timer corresponds to the length of the CC stage, in the CC phase, before a CV stage should be inserted. If the timer has not expired, the routine returns to 412 and continues performing the CC(n) charge stage. However, if the timer has expired at 416, it goes to 418 and sets a CVx variable to Vb. It then goes to 420 and performs a CV stage at a constant voltage of CVx (which here would be Vb). It then goes to 422 and checks if Ib is less than the charge level for the next CC phase, CC(n+1). If not, then it continues in the CV stage. Once Ib does equal, or goes below, the current level for CC(n+1), then the routine returns to 406 and proceeds as discussed. Of note, at 410, if the battery voltage (Vb) is still less than the begin voltage for the next CC phase, CC(n+1), then it stays in the CC(n) phase from the previous CC stage. This, along with the timer, is how CV stages are interleaved within a CC phase for this example. If the CV level was equal to or above the begin voltage (Vcb) for the next CC phase, then the routine would select a next CC phase satisfying the voltage conditions for Vb.

Returning to 414, if Vb is at or above Vcc(n+1), the routine would go to 426 and start a CV stage at a voltage of Vcc(n+1), the begin voltage for the next CC phase. At 428, it checks to see if the charge current (Ib) is less than the current level for the next CC phase. If not, it continues in the CV stage but once it goes below the CC(n+1) current level, then it loops back to 406 and proceeds as discussed.

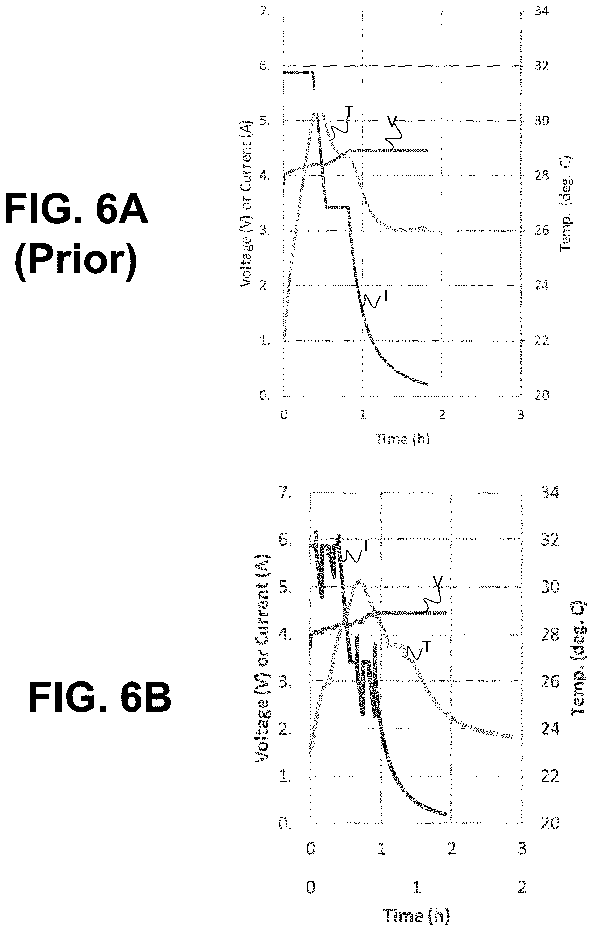

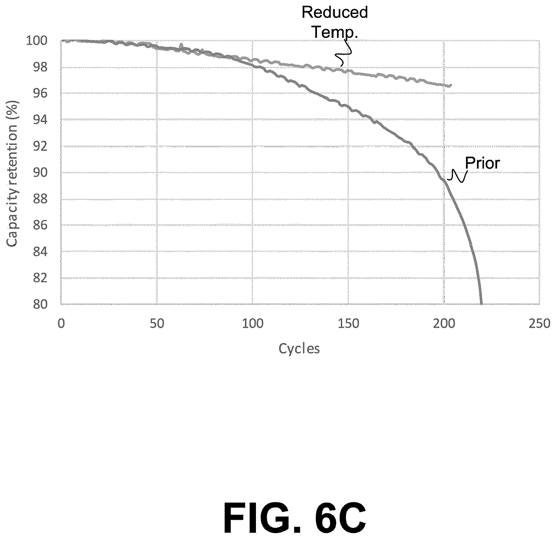

With reference to Figs 6A-6C, it can be seen how the fast-charging approaches of the routine of Fig. 4 (Fig. 6B) can achieve good temperature mitigation with reasonable fast charging performance, especially as contrasted with an example (Fig. 6A) employing prior methods. These figures show charge voltages and currents, along with associated charging battery temperatures. Since charging current is intermittently reduced by the CV stages during high CC current, and the last CV charging becomes shorter, approaches disclosed herein can reduce joule heating of the battery, resulting in the reduction of battery temperature rise with negligible increase in overall charge time. For example, in Fig. 6B, temperature rise is 7.1 °C and charging time is 1.90 hours, as contrasted with 8.4 °C and 1.82 hours with the existing two-stage charging exemplified in Fig. 6A. Such differences in temperature rise can result in meaningful differences in cycle life. This is illustrated in the graph of Fig. 6C.

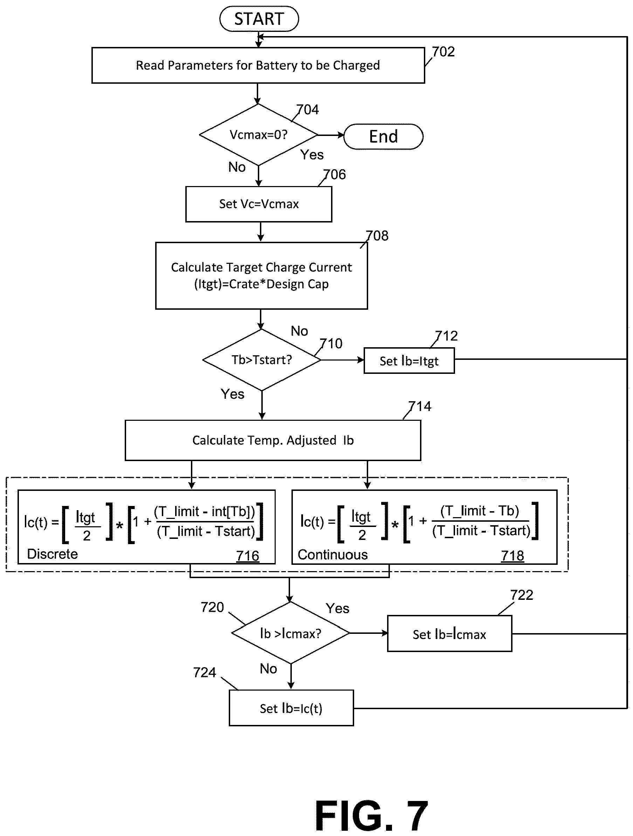

Fig. 7 is a flow diagram showing a routine for implementing another fast-charging approach in accordance with some embodiments. IN this routine, temperature is controlled using a feedback loop to mitigate against excessive temperature rise. The routine starts at 702 where it reads various battery charge parameters from a battery or from some other location. For example, it may read values for battery charge voltage (Vb), battery charge current (Ib), battery charge temperature (Tb), maximum battery charge Voltage (Vcmax), and maximum batt. charging current (Icmax). Next at 704, the routine checks to confirm that Vcmax is not 0, which indicates that the battery is charged. Of course, other ways to check if the battery is charged are available and may be employed. If the battery is charged, then the routine ends. Otherwise, it goes to 706 and sets the charge voltage (Vb) to a maximum allowed charge voltage (Vcmax).

At 708, the routine calculates a target charge current (Ictgt), which should be fast enough for desired charge speeds but slow enough to avoid excessive temperature rises. In some embodiments, it calculates the target current as a product of charge rate (Crate) and a design capacity for the battery. For example, Crate may be a scaled charge rate factor such as Crate = 1, 1.2, 0.7, or 1.5. The Design Cap is the design capacity of the battery, typically expressed in mAh, e.g., 5200 mAh, 3000 mAh, 4000 mAh, etc.

At 710, the routine checks to confirm if the battery temperature (Tb) is above the starting temperature (Tstart). If not, the routine at 712 sets the charge current (Ib) to the target current (Itgt). On the other hand, if it is above the start temperature, then the routine proceeds to 714 and calculates a charge current value, Ic(t) as a function of temperature. In the depicted embodiment, two temperature dependent charge current function options, one for integer-based step approach (716) and one for a continuous approach (718), are shown. Of course, any suitable function or methodology may be used to derive a temperature-based charge current value. With the depicted options, the charge current starts around Itgt and goes down, approaching Itgt/2, as the battery temperature rises. It may be desired to use a function that decreases charge current at a suitable rate as the temperature of the battery increases.

At 720, the routine checks to see if the actual charge current (Ib) is greater than the max allowed charge current (Icmax). If so, it goes to 722 and sets Ic to Icmax. On the other hand, if the charge current is not above Icmax, then from 720, it would go to 724 and set Ib to the previously calculated temperature-based charge current, Ic(t). Either way, it returns back to the start and proceeds as described.

Note that in some embodiments, a timer may be incorporated into this overall routine loop so that the battery temperature can be monitored at a periodic rate (e.g., checks every 1 second) and once the battery temperature rises above a programmed start value (e.g., 30°C), the temperature difference from a programmed limit value (Tlim=36°C for example) may be applied as feedback to proportionally reduce the charging current until the battery temperature and charging current reach an equilibrium at the limit value. From here, the system regulates the battery temperature at the limit value. This forms a temperature control loop which sustains the highest charging current that can be provided without exceeding the temperature limit. In some embodiments, the battery charger circuit is operated primarily in a CC charge mode using a temperature control loop with a voltage limit. A charge system control unit may be used to calculate and program current limit values to the charger circuit thereby forming an outer control loop to regulate battery temperature. In some embodiments, the temperature control loop will regulate until the rising battery charge reaches the level where the circuit becomes voltage limited, after which the current and temperature will decay until the battery reaches full charge. The control loop runs at a periodic interval that is sufficient to respond to temperature rise and fall in the system. In addition to responding to joule heating in the battery, the control loop can respond to other platform temperature changes including variations in ambient temperature as well as heating from other system components like CPU and graphics.

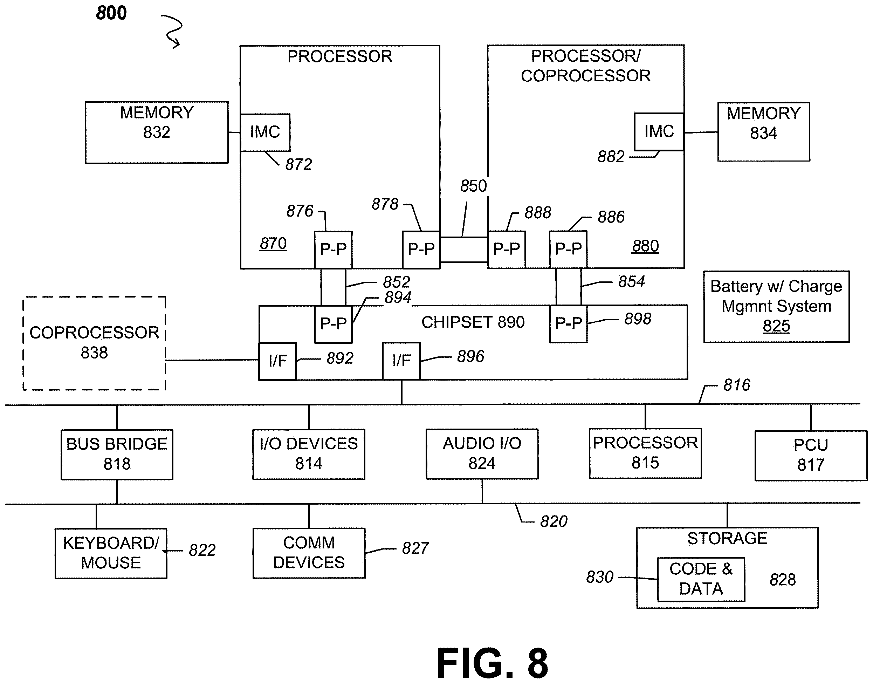

Fig. 8 illustrates an example computing system having a battery with a charging system 825, which may be implemented using any of the techniques described herein. Multiprocessor system 800 is an interfaced system and includes a plurality of processors including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is implemented, wholly or partially, with a system on a chip (SoC) or a multi-chip (or multi-chiplet) module, in the same or in different package combinations.

Processors 870 and 880 are shown including integrated memory control unit (IMC) circuitry 872 and 882, respectively. Processor 870 also includes interface circuits 876 and 878, along with core sets. Similarly, second processor 880 includes interface circuits 886 and 888, along with a core set as well. A core set generally refers to one or more compute cores that may or may not be grouped into different clusters, hierarchal groups, or groups of common core types. Cores may be configured differently for performing different functions and/or instructions at different performance and/or power levels. The processors may also include other blocks such as memory and other processing unit engines.

Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect, or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to one or more voltage regulators (not shown) to cause the voltage regulator(s) to generate the appropriate regulated voltage(s). PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller unit (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software. Along these lines, power management may be performed in concert with other power control units implemented autonomously or semi-autonomously, e.g., as control units or executing software in cores, clusters, IP blocks and/or in other parts of the overall system.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

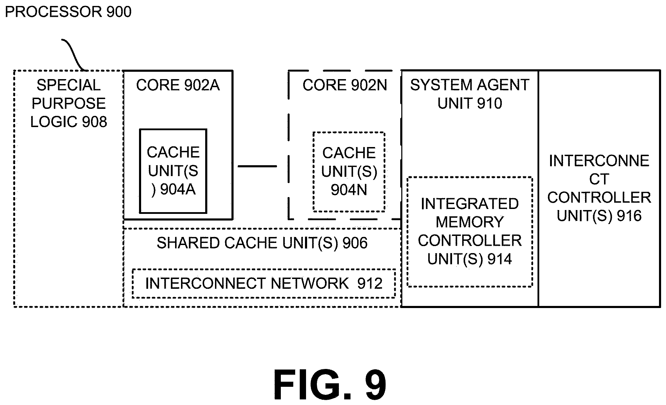

FIG. 9 illustrates a block diagram of an example processor and/or SoC 900 that may have one or more cores and an integrated memory control unit. The solid lined boxes illustrate a processor 900 with a single core 902(A), system agent unit circuitry 910, and a set of one or more interface control unit unit(s) circuitry 916, while the optional addition of the dashed lined boxes illustrates an alternative processor 900 with multiple cores 902(A)-(N), a set of one or more integrated memory control unit unit(s) circuitry 914 in the system agent unit circuitry 910, and special purpose logic 908, as well as a set of one or more interface control unit units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory control unit unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface control unit circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

Illustrative examples of the technologies disclosed herein are provided below. An embodiment of the technologies may include any one or more, and any compatible combination of, the examples described below.

The first example is a computer readable storage medium having instructions that when executed perform a method. The method includes causing a charger to apply two or more constant current (CC) charge phases to a battery and interleaving at least some of the two or more CC phases with at least one constant voltage (CV) charge stage.

Example 2 includes the subject matter of example 1, and wherein the two or more CC charge phases occur in a descending current level order.

Example 3 includes the subject matter of any of examples 1-2, and wherein the method identifies beginning voltage values for the two or more CC charge phases prior to applying a first CC charge phase to define a set of CC charge phase options.

Example 4 includes the subject matter of any of examples 1-3, and wherein the method skips one or more of the defined CC charge phase options to more rapidly reduce temperature rise in the battery.

Example 5 includes the subject matter of any of examples 1-4, and wherein the method contracts one or more of the defined CC charge phase options to reduce a temperature rise in the battery.

Example 6 includes the subject matter of any of examples 1-25 and wherein the method increases the number of CV charge phases within an executing CC charge phase to decrease a temperature in the battery.

Example 7 includes the subject matter of any of examples 1-6, and wherein the method reads battery charge data from the battery before causing the charger to apply the two or more CC charge phases.

Example 8 includes the subject matter of any of examples 1-7, and wherein the method is performed by a control unit in a computing platform.

Example 9 includes the subject matter of any of examples 1-8, and wherein the control unit is part of the battery or is implemented within a separate IC within the computing platform.

Example 10 is a computer readable storage medium having instructions that when executed, perform a method. The method includes causing a charger to charge current into a battery, monitoring a battery temperature, and controlling the charging current until the temperature reaches a target limit that may be below a rated maximum operating battery temperature.

Example 11 includes the subject matter of example 10, and wherein controlling includes reducing the charging current until the temperature reaches the target temperature limit.

Example 12 includes the subject matter of any of examples 10-11, and wherein reducing the charging current includes reducing the charging current based on a temperature difference between a current charge temperature and the temperature limit.

Example 13 includes the subject matter of any of examples 10-12, and wherein the difference is applied as feedback to proportionally reduce the charging current.

Example 14 includes the subject matter of any of examples 10-13, and wherein the method includes maintaining the battery temperature and charging current in an equilibrium mode when the temperature reaches the limit.

Example 15 includes the subject matter of any of examples 10-14, and wherein the method includes charging the current primarily in a CC charge mode using a temperature control loop with a voltage limit.

Example 16 includes the subject matter of any of examples 10-15, and wherein the method reads battery charge data from the battery before causing the charger to charge current into the battery.

Example 17 includes the subject matter of any of examples 10-16, and wherein the method is performed by a control unit in a computing platform.

Example 18 includes the subject matter of any of examples 10-17, and wherein the control unit is part of the battery or is implemented within a separate IC within the computing platform.

Example 19 is a computing system. The system includes a platform processor, a control unit, and a charger. The control unit is coupled with the platform processor. The charger is to charge a battery that is to provide power to the computing system, and the control unit is to control the charger to apply two or more constant current (CC) charge phases to the battery and interleave at least some of the two or more CC phases with at least one constant voltage (CV) charge stage.

Example 20 includes the subject matter of example 19, and wherein the two or more CC charge phases are to occur in a descending current level order.

Example 21 includes the subject matter of any of examples 19-20, and wherein the control unit is to identify beginning voltage values for the two or more CC charge phases prior to the charger applying a first CC charge phase to define a set of CC charge phase options.

Example 22 includes the subject matter of any of examples 19-21, and wherein the control unit skips one or more of the defined CC charge phase options to reduce temperature rise more rapidly in the battery.

Example 23 includes the subject matter of any of examples 19-20, and wherein the control unit contracts one or more of the defined CC charge phase options to reduce a temperature rise in the battery.

Example 24 includes the subject matter of any of examples 19-23, and wherein the control unit increases the number of CV charge phases within an executing CC charge phase to decrease the temperature in the battery.

Example 25 includes the subject matter of any of examples 19-24, and wherein the control unit is to read battery charge data from the battery before causing the charger to apply the two or more CC charge phases.

Example 26 is a computing system. The system includes a platform processor, a control unit, and a charger. The control unit is coupled with the platform processor. The charger is to charge a battery that is to provide power to the computing system, and the control unit is to cause a charger to charge current into a battery, monitor a battery temperature, and control the charging current until the temperature reaches a target limit.

Example 27 includes the subject matter of example 26, and wherein the target temperature limit is below a rated maximum operating battery temperature.

Example 28 includes the subject matter of any of examples 26-27, and wherein the control unit is to reduce the charging current until the temperature reaches the target temperature limit.

Example 29 includes the subject matter of any of examples 26-28, and wherein the control unit is to reduce the charging current based on a temperature difference between a current charge temperature and the temperature limit.

Example 30 includes the subject matter of any of examples 26-29, and wherein the difference is applied as feedback to proportionally reduce the charging current.

Example 31 includes the subject matter of any of examples 26-30, and wherein the control unit is to maintain the battery temperature and charging current in an equilibrium mode when the temperature reaches the limit.

Example 32 includes the subject matter of any of examples 26-31, and wherein the control unit is to charge the current primarily in a CC charge mode using a temperature control loop with a voltage limit.

Example 33 includes the subject matter of any of examples 26-32, and wherein the control unit is to read battery charge data from the battery before causing the charger to charge current into the battery.

Example 34 includes the subject matter of any of examples 26-33, and wherein the control unit is part of the battery or is implemented within a separate IC within the computing platform.

Example 35 includes the subject matter of any of examples 26-34, and wherein the computing platform is part of an electric vehicle.

Example 36 includes the subject matter of any of examples 26-35, and wherein the control unit and charger are part of a USB charging apparatus.

Example 37 is a computer readable storage medium having instructions that when executed, perform a method. The method includes causing a charger to apply a first constant current (CC) charge phase to a battery, and interleaving the first CC phase with at least one constant voltage (CV) charge stage.

Example 38 includes the subject matter of Example 37, and wherein the method comprises causing the charger to apply a second constant current (CC) charge phase, the first and second CC phases being at different current levels from each other, and interleaving the second CC phase with at least one constant voltage (CV) charge stage.

Example 39 includes the subject matter of any of Examples 37-38, and wherein the first and second CC charge phases occur in a descending current level order.

Example 40 includes the subject matter of any of Examples 37-39, and wherein the method identifies beginning voltage values for the first and second CC charge phases prior to applying any of the first and second CC charge phases to define a set of three or more CC charge phase options, the set including the first and second CC charge phases.

Example 41 includes the subject matter of any of Examples 37-40, and wherein the method skips one or more of the defined CC charge phase options to more rapidly reduce temperature rise in the battery.

Example 42 includes the subject matter of any of Examples 37-41, and wherein the method contracts one or more of the defined CC charge phase options to reduce a temperature rise in the battery.

Example 43 includes the subject matter of any of Examples 37-42, and wherein the method increases the number of CV charge phases within an executing CC charge phase to decrease a temperature in the battery.

Example 44 includes the subject matter of any of Examples 37-43, and wherein the method reads battery charge data from the battery before causing the charger to apply the first and second CC charge phases.

Example 45 includes the subject matter of any of Examples 37-44, and wherein the method is performed by a control unit in a computing platform.

Example 46 includes the subject matter of any of Examples 37-45, and wherein the control unit is part of the battery or is implemented within a separate IC within the computing platform.

Example 47 is a computing system that includes a platform processor; a control unit, and a charger. The control unit is coupled with the platform processor. The charger is to charge a battery that is to provide power to the computing system, wherein the control unit is to control the charger to cause a charger to apply a first constant current (CC) charge phase to a battery. The control unit is also to interleave the first CC phase with at least one constant voltage (CV) charge stage.

Example 48 includes the subject matter of example 47, and wherein the control unit is to cause the charger to apply a second constant current (CC) charge phase, the first and second CC phases being at different current levels from each other, and it is to interleave the second CC phase with at least one constant voltage (CV) charge stage.

Example 49 includes the subject matter of any of examples 47-48, and wherein the first and second CC charge phases are to occur in a descending current level order.

Example 50 includes the subject matter of any of examples 47-49, and wherein the control unit is to identify beginning voltage values for the first and second CC charge phases prior to applying any of the first and second CC charge phases to define a set of three or more CC charge phase options, the set including the first and second CC charge phases. 22. The system of claim 21, wherein the control unit skips one or more of the defined CC charge phase options to more rapidly reduce temperature rise in the battery.

Example 51 includes the subject matter of any of examples 47-50, and wherein the control unit contracts one or more of the defined CC charge phase options to reduce a temperature rise in the battery.

Example 52 includes the subject matter of any of examples 47-51, and wherein the control unit increases the number of CV charge phases within an executing CC charge phase to decrease a temperature in the battery.

Example 53 includes the subject matter of any of examples 47-52, and wherein the control unit is to read battery charge data from the battery before causing the charger to apply the two or more CC charge phases.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. Different circuits or modules may share or even consist of common components, for example, A control circuit may be a circuit to perform a first function and at the same time, the same control unit circuit may also be a circuit to perform another function, related or not related to the first function.

The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about," generally refer to being within +/-10% of a target value.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are dependent upon the platform within which the present disclosure is to be implemented.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium. A non-exhaustive list of more specific examples of a computer readable storage medium may include: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

As defined herein, the term "output" means storing in physical memory elements, e.g., devices, writing to display or other peripheral output device, sending, or transmitting to another system, exporting, or the like.

As defined herein, the term "if' means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

As defined herein, the terms "one embodiment," "an embodiment," or similar language mean that a particular feature, structure, or characteristic described in connection with the embodiment is included in at least one embodiment described within this disclosure. Thus, appearances of the phrases "in one embodiment," "in an embodiment," and similar language throughout this disclosure may, but do not necessarily, all refer to the same embodiment.

As defined herein, the term "processor" means at least one hardware circuit configured to carry out instructions contained in program code. The hardware circuit may be an integrated circuit. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a control unit, and so forth.

A computer program product may include a computer readable storage medium (or media) having computer readable program instructions thereon for causing a processor to carry out aspects of the inventive arrangements described herein. Within this disclosure, the term "program code" is used interchangeably with the term "computer readable program instructions." Computer readable program instructions described herein may be downloaded to respective computing/processing devices from a computer readable storage medium or to an external computer or external storage device via a network, for example, the Internet, a LAN, a WAN and/or a wireless network. The network may include copper transmission cables, optical transmission fibers, wireless transmission, routers, firewalls, switches, gateway computers and/or edge devices including edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations for the inventive arrangements described herein may be assembler instructions, instruction-set-architecture (ISA) instructions, machine instructions, machine dependent instructions, microcode, firmware instructions, or either source code or object code written in any combination of one or more programming languages, including an object oriented programming language and/or procedural programming languages. Computer readable program instructions may include state-setting data. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or a WAN, or the connection may be made to an external computer (for example, through the Internet using an Internet Service Provider). In some cases, electronic circuitry including, for example, programmable logic circuitry, an FPGA, or a PLA may execute the computer readable program instructions by utilizing state information of the computer readable program instructions to personalize the electronic circuitry, in order to perform aspects of the inventive arrangements described herein.

Certain aspects of the inventive arrangements are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, may be implemented by computer readable program instructions, e.g., program code.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the operations specified in the flowchart and/or block diagram block or blocks.

The computer readable program instructions may also be loaded onto a computer, other programmable data processing apparatus, or other device to cause a series of operations to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various aspects of the inventive arrangements. In this regard, each block in the flowchart or block diagrams may represent a module, segment, or portion of instructions, which comprises one or more executable instructions for implementing the specified operations.

In some alternative implementations, the operations noted in the blocks may occur out of the order noted in the figures. For example, two blocks shown in succession may be executed substantially concurrently, or the blocks may sometimes be executed in the reverse order, depending upon the functionality involved. In other examples, blocks may be performed generally in increasing numeric order while in still other examples, one or more blocks may be performed in varying order with the results being stored and utilized in subsequent or other blocks that do not immediately follow. It will also be noted that each block of the block diagrams and/or flowchart illustration, and combinations of blocks in the block diagrams and/or flowchart illustration, may be implemented by special purpose hardware-based systems that perform the specified functions or acts or carry out combinations of special purpose hardware and computer instructions.

The corresponding structures, materials, acts, and equivalents of all means or step plus function elements that may be found in the claims below are intended to include any structure, material, or act for performing the function in combination with other claimed elements as specifically claimed.

## Claims

1. A computer readable storage medium having instructions that when executed, perform a method comprising:
causing a charger to apply a first constant current (CC) charge phase to a battery; and
interleaving the first CC phase with at least one constant voltage (CV) charge stage.

2. The storage medium of claim 1, wherein the method comprises causing the charger to apply a second constant current (CC) charge phase, the first and second CC phases being at different current levels from each other, and interleaving the second CC phase with at least one constant voltage (CV) charge stage.

3. The storage medium of claim 2, wherein the first and second CC charge phases occur in a descending current level order.

4. The storage medium of claims 2 or 3, wherein the method identifies beginning voltage values for the first and second CC charge phases prior to applying any of the first and second CC charge phases to define a set of three or more CC charge phase options, the set including the first and second CC charge phases.

5. The storage medium of claim 4, wherein the method skips one or more of the defined CC charge phase options to more rapidly reduce temperature rise in the battery.

6. The storage medium of claims 4 or 5, wherein the method contracts one or more of the defined CC charge phase options to reduce a temperature rise in the battery.

7. The storage medium of any of claims 4-6, wherein the method increases the number of CV charge phases within an executing CC charge phase to decrease a temperature in the battery.

8. The storage medium of any of claims 1-7, wherein the method reads battery charge data from the battery before causing the charger to apply the first and second CC charge phases.

9. A computing system, comprising:
a platform processor;
a control unit coupled with the platform processor; and
a charger to charge a battery that is to provide power to the computing system, wherein the control unit is to control the charger to cause a charger to apply a first constant current (CC) charge phase to a battery, and the control unit is to interleave the first CC phase with at least one constant voltage (CV) charge stage.

10. The system of claim 9, wherein the control unit is to cause the charger to apply a second constant current (CC) charge phase, the first and second CC phases being at different current levels from each other, and it is to interleave the second CC phase with at least one constant voltage (CV) charge stage.

11. The system of claim 10, wherein the first and second CC charge phases are to occur in a descending current level order.

12. The system of claims 10 or 11, wherein the control unit is to identify beginning voltage values for the first and second CC charge phases prior to applying any of the first and second CC charge phases to define a set of three or more CC charge phase options, the set including the first and second CC charge phases.

13. The system of claim 12, wherein the control unit contracts one or more of the defined CC charge phase options to reduce a temperature rise in the battery.

14. The system of claims 12 or 13, wherein the control unit increases the number of CV charge phases within an executing CC charge phase to decrease a temperature in the battery.

15. The system of any of claims 9-14, wherein the control unit is to read battery charge data from the battery before causing the charger to apply the two or more CC charge phases.
